# EUROPEAN PATENT APPLICATION

(11) **EP 4 568 392 A1**
(43) Date of publication of application: **11.06.2025**
(21) Application number: 23849895.0
(22) Date of filing: 20.07.2023
(51) Int. Cl.: H04W 72/0453, H04W 28/06, H04W 84/12

(54) **COMMUNICATION DEVICE, COMMUNICATION DEVICE CONTROL METHOD, AND PROGRAM**

(30) Priority: 04.08.2022 JP 2022125087
(71) Applicant: CANON KABUSHIKI KAISHA, Tokyo 146-8501 (JP)
(72) Inventor: TAKADA Tomoyuki, Tokyo 146-8501 (JP)
(74) Representative: Canon Europe Limited
(86) International application number: PCT/JP2023/026489
(87) International publication number: WO 2024/029340

(57) **Abstract**

A transmission unit configured to transmit a Physical Layer Protocol Data Unit (PPDU) in a millimeter-wave band is provided, wherein a PPDU contains a training field containing a signal for synchronization of reception timing in the millimeter-wave band, a channel estimating field containing a signal for channel estimation in the millimeter-wave band, a channel bandwidth field containing channel bandwidth information, and a data field for a channel bandwidth indicated by the channel bandwidth information contained in the channel bandwidth field, and wherein a channel bandwidth field as the channel bandwidth information indicates a channel bandwidth of less than 2.16 GHz.

## Description

### Technical Field

The present invention relates to a communication apparatus configured to perform wireless communication, a method for controlling the communication apparatus, and a program.

### Background Art

The IEEE 802.11 series standards are known as wireless LAN communication standards developed by IEEE (InstitUte of Electrical and Electronics Engineers). Wireless LAN is an abbreviation for wireless Local Area Network. The IEEE 802.11 series standards include IEEE 802.11a/b/g/n/ac/ad/ax/ay/be standards. The IEEE 802.11a/b/g/n/ac/ax/be standards are standards that target the 2.4 GHz band, the 5 GHz band, or the 6 GHz band, i.e., the microwave band. On the other hand, the IEEE 802.11ad/ay standards are standards that target the millimeter-wave band above the 45 GHz band, including the 60 GHz band.

Patent Document 1 discusses the IEEE 802.11ax standard specifying the execution of wireless communication using OFDMA (Orthogonal Frequency Division Multiple Access). The IEEE 802.11ax standard achieves high effective throughput through execution of wireless communication using OFDMA. The IEEE 802.11be standard, which is the next standard after the IEEE 802.11ax standard, expands the channel bandwidth to 320 MHz to achieve higher throughput.

IEEE has been studying a standard provisionally named Ultra High Reliability (UHR) via the Physical Layer (Physical Layer, PHY) to follow the IEEE 802.11be standard. Thus, hereinafter, the standard following the IEEE 802.11be standard will provisionally be referred to as the IEEE 802.11 UHR standard. As for the IEEE 802.11 UHR standard, the study on incorporating the millimeter-wave band in addition to the microwave band has been conducted. For the microwave band, the expansion of the channel bandwidth to 480 MHz or 640 MHz has been studied to further improve throughput. For the millimeter-wave band, the expansion of the channel bandwidth, which in the IEEE 802.11ad/ay standards supported only 2.16 GHz, 4.32 GHz, 6.48 GHz, or 8.64 GHz, has been studied to additionally support bandwidths below 2.16 GHz. This contributes to an increase in the number of simultaneous multi-user connections to a wireless medium, a reduction in power consumption, and simplification of hardware or software.

### Citation List

### Patent Literature

PTL 1: Japanese Patent Laid-Open No. 2018-50133

### Summary of Invention

### Technical Problem

However, the IEEE 802.11 series standards do not define any method for notifying communication partner apparatuses of the channel bandwidth of a Physical Layer Protocol Data Unit (PPDU) with a channel bandwidth of less than 2.16 GHz in the millimeter-wave band. Thus, communication using a PPDU with a channel bandwidth of less than 2.16 GHz is not possible in the millimeter-wave band.

### Solution to Problem

The above-described issued is addressed by a wireless communication apparatus including a transmission unit configured to transmit a Physical Layer Protocol Data Unit (PPDU) in a millimeter-wave band, wherein the PPDU contains a training field containing a signal for synchronization of reception timing in the millimeter-wave band, a channel estimating field containing a signal for channel estimation in the millimeter-wave band, a channel bandwidth field containing channel bandwidth information, and a data field for a channel bandwidth indicated by the channel bandwidth information contained in the channel bandwidth field, and wherein a channel bandwidth field as the channel bandwidth information indicates a channel bandwidth of less than 2.16 GHz.

### Advantageous Effects of Invention

The present invention is directed to providing a notification that communication is to be performed using a channel bandwidth of less than 2.16 GHz in the millimeter-wave band.

### Brief Description of Drawings

[Fig. 1] Fig. 1 is a diagram illustrating a configuration of a network according to the present invention.
[Fig. 2] Fig. 2 is a diagram illustrating a hardware configuration of a communication apparatus according to the present invention.
[Fig. 3] Fig. 3 is a diagram illustrating a functional configuration of the communication apparatus according to the present invention.
[Fig. 4] Fig. 4 is a diagram illustrating an operation of the communication apparatus that relates to PPDU transmission.
[Fig. 5] Fig. 5 is a diagram illustrating an example of a field configuration of a PPDU.
[Fig. 6] Fig. 6 is a diagram illustrating an operation of the communication apparatus that relates to PPDU reception.

### Description of Embodiments

Hereinafter, exemplary embodiments of the present invention will be described in detail with reference to the accompanying drawings. Note that the configurations shown in the following exemplary embodiments are merely examples, and the present invention is not limited to the illustrated configurations.

### (Configuration of Wireless Communication System)

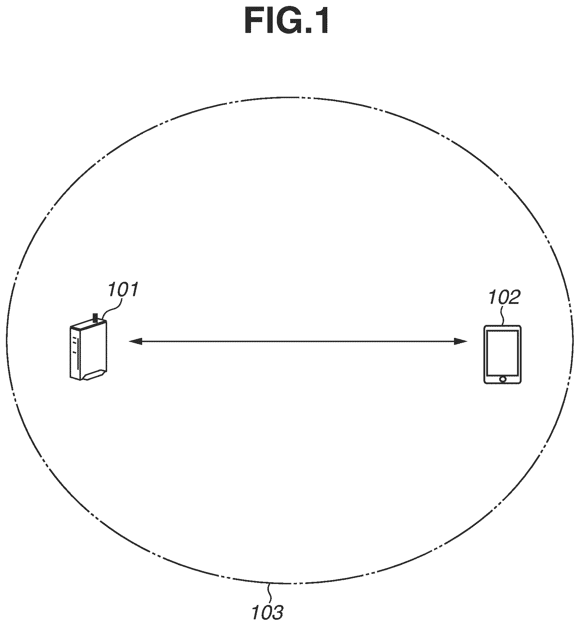

Fig. 1 illustrates a configuration of a wireless network to which communication apparatuses 101 and 102 according to the present invention belong.

The present invention is applied to the communication apparatuses 101 and 102. The communication apparatuses 101 and 102 are configured to execute wireless communication in accordance with the next standard that follows the IEEE 802.11be standard targeting a maximum transmission speed of 46.08 Gbps and targets for a maximum transmission speed of 90 Gbps to 100 Gbps or higher. The next standard following 802.11be sets the support for highly-reliable communication and low-latency communication as a new goal to be achieved. Based on the above description, the present embodiment provisionally refers to the next standard that follows IEEE 802.11be and targets a maximum transmission speed of 90 Gbps to 100 Gbps or higher as IEEE 802.11 UHR (Ultra High Reliability). It should be noted that the name "IEEE 802.11 UHR" is provided for convenience based on the goal to be achieved by the next standard and key features of the standard and may be replaced with another name when the standard is finalized. It should be noted that the present specification and the attached claims are applicable to all next standards that are essentially standards that follow the 802.11be standard and can support wireless communication.

The communication apparatus 101 is an UHR AP (Ultra High Reliability Access Point, which will be referred to simply as AP hereinafter) compliant with the IEEE 802.11 UHR standard. The communication apparatus 102 is a non-AP UHR STA (hereinafter, referred to simply as STA) compliant with the IEEE 802.11 UHR standard. The communication apparatus 101 and the communication apparatus 102 are capable of executing wireless communication in accordance with the IEEE 802.11 UHR standard. IEEE is an abbreviation for InstitUte of Electrical and Electronics Engineers.

The communication apparatuses 101 and 102 are capable of communicating in the microwave bands, including the 2.4 GHz, 5 GHz, and 6 GHz bands, or in the millimeter-wave band above 45 GHz, including the 60 GHz band. In the present embodiment, the millimeter-wave band refers to the frequency band above 45 GHz. The communication apparatuses 101 and 102 are capable of operating with a channel bandwidth of 20 MHz, 40 MHz, 80 MHz, 160 MHz, 320 MHz, 480 MHz, or 640 MHz in the microwave band. Further, the communication apparatuses 101 and 102 are capable of operating with a channel bandwidth of 2.16 GHz, 4.32 GHz, 6.48 GHz, or 8.64 GHz in the millimeter-wave band. Furthermore, the communication apparatuses 101 and 102 are capable of operating with a channel bandwidth of 2.16/n [GHz] (n is a natural number more than or equal to 2) or 20 × m [MHz] (m is a natural number) in the millimeter-wave band. Regardless of the above description, the communication apparatuses 101 and 102 may be configured to operate only with a channel bandwidth of less than 2.16 GHz in the millimeter-wave band.

While the communication apparatuses 101 and 102 are described to support the IEEE 802.11 UHR standard, the communication apparatuses 101 and 102 may also support IEEE 802.11 standards preceding the IEEE 802.11 UHR standard, in addition to the IEEE 802.11 UHR standard. Specifically, the communication apparatuses 101 and 102 may support at least one of the IEEE 802.11a/b/g/n/ac/ax/be standards.

Further, other communication standards, such as Bluetooth^{®}, NFC, UWB, ZigBee, and MBOA, may also be supported in addition to the IEEE 802.11 standard series.

UWB is an abbreviation for Ultra Wide Band, and MBOA is an abbreviation for Multi Band OFDM Alliance. NFC is an abbreviation for Near Field Communication. UWB includes wireless USB, wireless 1394, and WiNET. Communication standards for wired communication, such as wired LAN, may also be supported.

Specific examples of the communication apparatus 101 include, but are not limited to, a wireless LAN router and a personal computer (PC). The communication apparatus 101 may be an information process apparatus, such as a wireless chip, capable of executing wireless communication in accordance with the IEEE 802.11 UHR standard. Further, specific examples of the communication apparatus 102 include, but are not limited to, a camera, a tablet, a smartphone, a PC, a mobile phone, a video camera, and a headset. Further, the communication apparatus 102 may be an information processing apparatus, such as a wireless chip, capable of executing wireless communication in accordance with the IEEE 802.11 UHR standard. While Fig. 1 illustrates a wireless network including one AP and one STA, the number of APs and the number of STAs are not limited to one. For example, a plurality of STAs may be included.

### (Configurations of AP and STA)

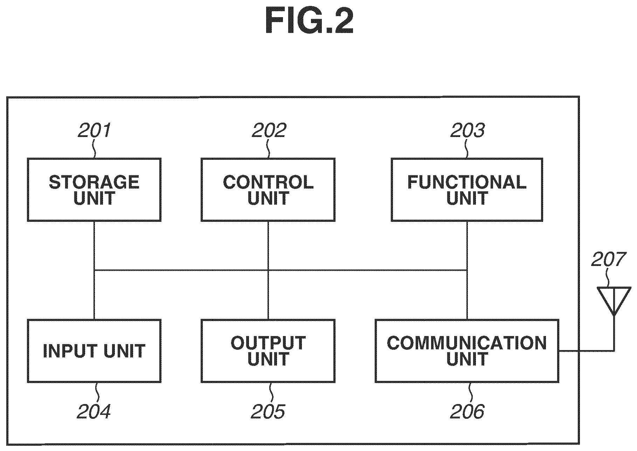

Fig. 2 illustrates an example of a hardware configuration of the communication apparatus 101 according to the present embodiment. The communication apparatus 101 includes a storage unit 201, a control unit 202, a functional unit 203, an input unit 204, an output unit 205, a communication unit 206, and an antenna 207. It should be noted that a plurality of antennas may be provided.

The storage unit 201 includes one or more memories, such as ROMs and RAMs, and stores various types of information, such as computer programs for executing various types of operations described below and communication parameters for wireless communication. ROM is an abbreviation for Read Only Memory, and RAM is an abbreviation for Random Access Memory. In addition to memories such as ROMs and RAMs, a storage medium, such as a flexible disk, a hard disk, an optical disk, a magneto-optical disk, a CD-ROM, a CD-R, a magnetic tape, a non-volatile memory card, or a DVD may also be used as the storage unit 201. Further, the storage unit 201 may include a plurality of memories.

The control unit 202 includes one or more processors, such as CPUs and/or MPUs, and controls entire operation of the communication apparatus 101 by executing computer programs stored in the storage unit 201. The control unit 202 may control entire operation of the communication apparatus 101 through the coordination of computer programs stored in the storage unit 201 and an OS (Operating System). Further, the control unit 202 generates data and signals (wireless frames) that are transmitted through communication with other communication apparatuses. CPU is an abbreviation for Central Processing Unit, and MPU is an abbreviation for Micro Processing Unit. The control unit 202 may include a plurality of processors, such as multi-core processors, and the plurality of processors may control entire operation of the communication apparatus 101.

Further, the control unit 202 controls the functional unit 203 and executes predetermined processes, such as wireless communication, imaging, printing, and projection. The functional unit 203 is hardware that is used by the communication apparatus 101 to execute predetermined processes.

The input unit 204 receives various types of operations from users. The output unit 205 provides various types of output to the users through a monitor screen and/or a speaker. The output from the output unit 205 may be a display on the monitor screen, audio output through the speaker, or vibration output. The input unit 204 and the output unit 205 may be realized by a single module, such as a touch panel. Further, each of the input unit 204 and the output unit 205 may either be integrated with or separated from the communication apparatus 101.

The communication unit 206 controls wireless communication compliant with the IEEE 802.11 UHR standard. Further, the communication unit 206 may control wireless communication compliant with other IEEE 802.11 series standards, in addition to the IEEE 802.11 UHR standard, and/or wired communication, such as wired LANs. The communication unit 206 controls the antenna 207 and performs transmission and reception of signals for wireless communication generated by the control unit 202.

In a case where the communication apparatus 101 is compliant with NFC standard and/or the BlUetooth standard in addition to the IEEE 802.11 UHR standard, control of wireless communication compliant with these communication standards may also be performed. Further, in a case where the communication apparatus 101 is capable of executing wireless communication compliant with a plurality of communication standards, the communication apparatus 101 may include a communication unit and an antenna for the corresponding communication standard individually. The communication apparatus 101 communicates data, such as image data, document data, and video data, with the communication apparatus 102 through the communication unit 206. The antenna 207 may be configured separately from the communication unit 206 or integrated with the communication unit 206 as a single module.

The antenna 207 is an antenna capable of performing communication in the microwave band, including the 2.4 GHz, 5 GHz, and 6 GHz bands, and in the millimeter-wave band above 45 GHz, including the 60 GHz band. The communication apparatus 101 may include one or more antennas. Further, a different antenna may be included for each frequency band. In a case where the communication apparatus 101 includes a plurality of antennas, the communication apparatus 101 may include the communication units 206 each for the corresponding antenna.

The communication apparatus 102 has a hardware configuration similar to that of the communication apparatus 101.

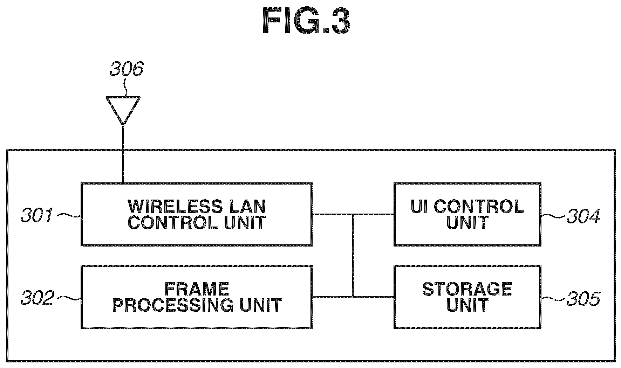

Fig. 3 is a block diagram illustrating a functional configuration of the communication apparatus 101 according to the present embodiment. The communication apparatus 102 also has a similar configuration. The communication apparatus 101 herein includes a wireless LAN control unit 301. The number of wireless LAN control units is not limited to one and may be more than one. The communication apparatus 101 further includes a frame processing unit 302, a UI control unit 304, a storage unit 305, and a wireless antenna 306.

The wireless LAN control unit 301 includes an antenna and a circuit for transmitting and receiving wireless signals to and from other wireless LAN apparatuses and also includes programs for controlling them. The wireless LAN control unit 301 executes wireless LAN communication control based on the IEEE 802.11 standard series using frames generated by the frame processing unit 302.

The frame processing unit 302 processes wireless control frames that are transmitted or received by the wireless LAN control unit 301. The content of wireless control generated and analyzed by the frame processing unit 302 may be subject to constraints based on settings stored in the storage unit 305. Further, changes may be performed based on user settings via the UI control unit 304. Information about generated frames is transmitted to the wireless LAN control unit 301 and then to a communication partner. Information about frames received by the wireless LAN control unit 301 is passed to the frame processing unit 302 and analyzed.

The UI control unit 304 includes hardware relating to user interfaces, such as a touch panel or buttons, for receiving operations performed on the communication apparatus 102 by a user (not illustrated) of the communication apparatus 101 and programs for controlling them. The UI control unit 304 also has a function for presenting information, such as a display of an image or audio output, to the user.

The storage unit 305 is a storage apparatus that may include a ROM and a RAM storing programs and data for operating the communication apparatus 101.

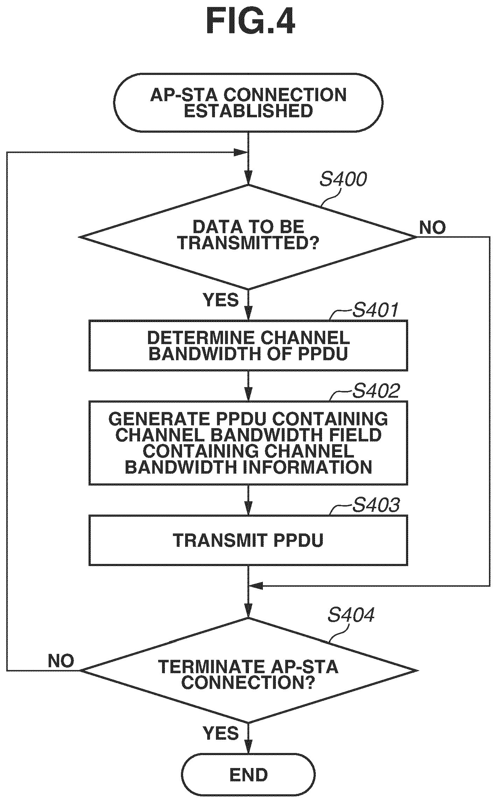

An operation of the communication apparatuses 101 and 102 according to the present embodiment that relates to Physical Layer Protocol Data Unit (PPDU) transmission in the millimeter-wave band will be described below with reference to Fig. 4. The operation is initiated when the communication apparatus 101 and the communication apparatus 102 are connected, i.e., when the communication apparatus 102 joins a Basic Service Set (BSS) formed by the communication apparatus 101.

The communication apparatus 102 participates in the BSS based on an instruction input by the user. Prior to participation in the BSS, when the communication apparatus 102 receives a Beacon frame transmitted by the AP, the communication apparatus 102 transmits an Association Request frame to the AP to request participation in the BSS and receives an Association Response frame, which is a response frame to the Association Request frame, whereby the communication apparatus 102 participates in the BSS.

Prior to the transmission and reception of the Association Request/Response frames, the communication apparatus 102 may transmit a Probe Request frame to discover APs and receive a Probe Response frame, which is a response frame to the Probe Request frame.

The main component responsible for the operation of the communication apparatuses 101 and 102 is the control unit 202 in terms of hardware and the frame processing unit 302 in terms of functionality. The operation of the communication apparatus 101 will be described below. Unless otherwise specified, the same applies to the operation of the communication apparatus 102.

In step S400, the communication apparatus 101 determines whether there is data to be transmitted. In a case where the communication apparatus 101 determines that there is data to be transmitted, the processing proceeds to step S401.

In step S401, the communication apparatus 101 determines the channel bandwidth of the PPDU that contains the data to be transmitted. Options for the channel bandwidth include 2.16 GHz, 4.32 GHz, 6.48 GHz, and 8.64 GHz. The options for the channel bandwidth further include a channel bandwidth expressed as 2.16/n [GHz] (n is a natural number more than or equal to 2). Examples include 1.08 GHz, 540 MHz, 270 MHz, 135 MHz, 67.5 MHz, 33.75 MHz, and 16.875 MHz. Further, the options for the channel bandwidth may also include a channel bandwidth expressed as 20 × m [MHz] (m is a natural number). Examples include 20 MHz, 40 MHz, 80 MHz, 160 MHz, 320 MHz, 480 MHz, 640 MHz, and 1.28 GHz. The channel bandwidth is determined based on the capabilities supported by the communication apparatuses 101 and 102, current operating channel bandwidth, channel usage status, amount of transmitted data, power consumption, and others to achieve either the highest possible throughput between the data transmitting/receiving apparatuses or across the entire BSS, or the lowest possible power consumption for the communication apparatus 101 or the communication apparatus 102. After the communication apparatus determines the channel bandwidth, the processing proceeds to step S402.

In step S402, the communication apparatus 101 generates a PPDU containing a channel bandwidth field that contains channel bandwidth information. The channel bandwidth field refers to a Scrambler Initialization field, Compressed BW field, or BW field described below. The PPDU generated in step S402 refers to a Control mode PPDU, SC mode PPDU, or OFDM mode PPDU. The Control mode PPDU refers to a PPDU for transmitting information that requires high reliability, such as a control frame. The SC mode PPDU refers to a PPDU that is transmitted using a single-carrier modulation method. The OFDM mode PPDU refers to a PPDU that is transmitted using an OFDM modulation method.

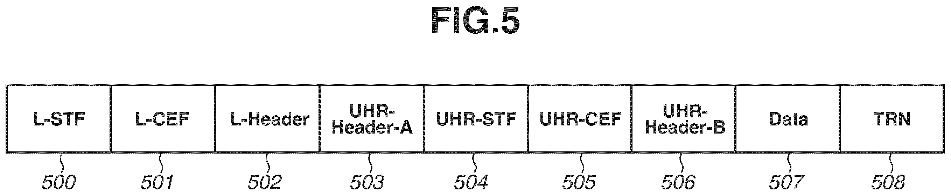

Fig. 5 illustrates an example of a PPDU field configuration. L-STF 500 and L-CEF 501 are respectively an L-STF field and an L-CEF field defined in the IEEE 802.11ay standard. The L-STF 500 is a training field containing a signal for synchronizing reception timing. The L-CEF 501 is a channel estimating field containing a signal to be used for channel estimation.

L-Header 502 is a header field containing information for demodulating or interpreting the subsequent fields. The L-Header 502 contains channel bandwidth information indicating a channel bandwidth. In the case of the Control mode PPDU, channel bandwidth information is contained in the Scrambler Initialization field in the L-Header field. The Scrambler Initialization field is a field consisting of 4 bits. In the case of the EDMG SC mode PPDU or EDMG OFDM mode PPDU mode, channel bandwidth information is contained in the least significant 5 bits of the Length field in the L-Header field. The least significant 5 bits of the Length field is also referred to as a Compressed BW field.

For example, the relationship between channel bandwidths indicated by values in the Scrambler Initialization field of the Control mode PPDU is configured as follows. The relationship may be configured to express the channel bandwidth as 2.16/n [GHz], where n is the value in the Scrambler Initialization field. Further, the relationship may be configured to express the channel bandwidth as 20 × m [MHz], where m is the value in the Scrambler Initialization field. Further, the relationship may be configured so that a value of 0 in the Scrambler Initialization field indicates a channel bandwidth of 20 MHz, a value of 1 in the Scrambler Initialization field indicates a channel bandwidth of 40 MHz, a value of 2 in the Scrambler Initialization field indicates a channel bandwidth of 80 MHz, a value of 3 in the Scrambler Initialization field indicates a channel bandwidth of 160 MHz, a value of 4 in the Scrambler Initialization field indicates a channel bandwidth of 320 MHz, a value of 5 in the Scrambler Initialization field indicates a channel bandwidth of 480 MHz, a value of 6 in the Scrambler Initialization field indicates a channel bandwidth of 640 MHz, and a value of 7 in the Scrambler Initialization field indicates a channel bandwidth of 1.28 GHz.

The channel bandwidth indicated by the value in the Scrambler Initialization field is not limited to less than 2.16 GHz. For example, a channel bandwidth more than or equal to 2.16 GHz may be indicated based on a field other than the Scrambler Initialization field. In this case, the relationship may be configured so that a value of 0 in the Scrambler Initialization field indicates a channel bandwidth of 2.16 GHz, a value of 1 in the Scrambler Initialization field indicates a channel bandwidth of 8.64 GHz, a value of 2 in the Scrambler Initialization field indicates a channel bandwidth of 6.48 GHz, a value of 3 in the Scrambler Initialization field indicates a channel bandwidth of 4.32 GHz, a value of 4 in the Scrambler Initialization field indicates a channel bandwidth of 4.32 GHz, a value of 5 in the Scrambler Initialization field indicates a channel bandwidth of 4.32 GHz, a value of 6 in the Scrambler Initialization field indicates a channel bandwidth of 8.64 GHz, a value of 7 in the Scrambler Initialization field indicates a channel bandwidth of 8.64 GHz, a value of 8 in the Scrambler Initialization field indicates a channel bandwidth of 4.32 GHz, a value of 9 in the Scrambler Initialization field indicates a channel bandwidth of 4.32 GHz, a value of 10 in the Scrambler Initialization field indicates a channel bandwidth of 6.48 GHz, a value of 11 in the Scrambler Initialization field indicates a channel bandwidth of 8.64 GHz, a value of 12 in the Scrambler Initialization field indicates a channel bandwidth of 4.32 GHz, a value of 13 in the Scrambler Initialization field indicates a channel bandwidth of 4.32 GHz, a value of 14 in the Scrambler Initialization field indicates a channel bandwidth of 8.64 GHz, and a value of 15 in the Scrambler Initialization field indicates a channel bandwidth of 8.64 GHz.

Further, for example, the relationship between channel bandwidths indicated by values in the Compressed BW field of the SC mode PPDU or OFDM mode PPDU is configured as follows. The relationship may be configured to express the channel bandwidth as 2.16/m [GHz] in a case where the value in the Compressed BW field is defined as 19 + m and the value in the field is 21 or more. Further, the relationship may be configured to express the channel bandwidth as 20 × m [MHz] in a case where the value in the Compressed BW field is defined as 20 + m and the value in the field is 21 or more. Further, the relationship may be configured so that a value of 21 in the Compressed BW field indicates a channel bandwidth of 20 MHz, a value of 22 in the Compressed BW field indicates a channel bandwidth of 40 MHz, a value of 23 in the Compressed BW field indicates a channel bandwidth of 80 MHz, a value of 24 in the Compressed BW field indicates a channel bandwidth of 160 MHz, a value of 25 in the Compressed BW field indicates a channel bandwidth of 320 MHz, a value of 26 in the Compressed BW field indicates a channel bandwidth of 480 MHz, a value of 27 in the Compressed BW field indicates a channel bandwidth of 640 MHz, and a value of 28 in the Compressed BW field indicates a channel bandwidth of 1.28 GHz.

The channel bandwidth indicated by the value in the Compressed BW field is not limited to less than 2.16 GHz. For example, a channel bandwidth more than or equal to 2.16 GHz may be indicated based on a field other than the Compressed BW field. In this case, the relationship may be configured so that a value of 0 in the Compressed BW field indicates a channel bandwidth of 2.16 GHz, a value of 1 in the Compressed BW field indicates a channel bandwidth of 4.32 GHz, a value of 2 in the Compressed BW field indicates a channel bandwidth of 4.32 GHz, a value of 3 in the Compressed BW field indicates a channel bandwidth of 6.48 GHz, a value of 4 in the Compressed BW field indicates a channel bandwidth of 6.48 GHz, a value of 5 in the Compressed BW field indicates a channel bandwidth of 6.48 GHz, a value of 6 in the Compressed BW field indicates a channel bandwidth of 8.64 GHz, a value of 7 in the Compressed BW field indicates a channel bandwidth of 8.64 GHz, a value of 8 in the Compressed BW field indicates a channel bandwidth of 8.64 GHz, a value of 9 in the Compressed BW field indicates a channel bandwidth of 8.64 GHz, a value of 10 in the Compressed BW field indicates a channel bandwidth of 4.32 GHz, a value of 11 in the Compressed BW field indicates a channel bandwidth of 4.32 GHz, a value of 12 in the Compressed BW field indicates a channel bandwidth of 4.32 GHz, a value of 13 in the Compressed BW field indicates a channel bandwidth of 4.32 GHz, a value of 14 in the Compressed BW field indicates a channel bandwidth of 4.32 GHz, a value of 15 in the Compressed BW field indicates a channel bandwidth of 8.64 GHz, a value of 16 in the Compressed BW field indicates a channel bandwidth of 8.64 GHz, a value of 17 in the Compressed BW field indicates a channel bandwidth of 8.64 GHz, a value of 18 in the Compressed BW field indicates a channel bandwidth of 8.64 GHz, a value of 19 in the Compressed BW field indicates a channel bandwidth of 8.64 GHz, and a value of 20 in the Compressed BW field indicates a channel bandwidth of 8.62 GHz.

It should be noted that the Scrambler Initialization field and the Compressed BW field are configured to at least indicate a channel bandwidth of less than 2.16 GHz, and the number of bits in each field and the correspondence between values specified in the fields and channel bandwidths are not limited to the examples described above. The L-Header 502 may be configured to contain information contained in the L-Header field defined in the IEEE 802.11ay standard.

UHR-Header-A 503 is a header field containing information for demodulating or interpreting the subsequent fields in the IEEE 802.11 UHR standard. This field corresponds to an EDMG-Header-A field in the IEEE 802.11ay standard. The field contains a field indicating the length of a Physical layer Service Data Unit (PSDU) and a channel bandwidth field indicating channel bandwidth information. These fields respectively correspond to the PSDU Length field and the BW field in the IEEE 802.11ay standard. Thus, the channel bandwidth field in the UHR-Header-A 503 will be referred to as the BW field hereinafter. The UHR-Header-A 503 may further contain an MCS field indicating a Modulation and Coding Scheme (MCS) that is used in a data field. This field corresponds to an EDMG MCS field in the IEEE 802.11ay standard.

The BW field may also contain, in addition to the channel bandwidth information, channel information indicating a channel through which the fields or data fields following the UHR-Header-A 503 are transmitted, or a sub-channel, which is a unit obtained by dividing the channel. The channel bandwidth information and the channel information may be contained in separate fields individually, or may be encoded and contained in one field. An example of encoding and configuring in one field is a configuration using a bitmap in which each bit of the BW field corresponds to a bit that represents a channel with the minimum channel bandwidth. For example, in a case where the BW field is configured with 16 bits from b15 to b0 (b15 is the most significant bit and b0 is the least significant bit) and the minimum channel bandwidth is 540 MHz, b0 corresponds to a channel with a channel bandwidth of 540 MHz at the lowest frequency, and b15 corresponds to a channel with a channel bandwidth of 540 MHz at the highest frequency. In a case where a bit has a value of 0, it indicates that the fields or data fields following the UHR-Header-A 503 are not transmitted through the channel that corresponds to the bit. In a case where a bit has a value of 1, it indicates that the fields or data fields following the UHR-Header-A 503 are transmitted through the channel that corresponds to the bit. For example, in a case where only b0 has a value of 1, it indicates that the corresponding fields are transmitted using only the channel at the lowest frequency within a channel bandwidth of 540 MHz. In a case where only b0 and b1 have a value of 1, it indicates that the corresponding fields are transmitted using the channel at the lowest frequency and another channel that is 540 MHz higher in frequency than the channel at the lowest frequency within a channel bandwidth of 540 MHz × 2 = 1.08 GHz. In a case where all bits are 1, it indicates that the corresponding fields are transmitted within a channel bandwidth of 540 MHz × 16 = 8.64 GHz. The foregoing configuration of the BW field is not a limitation. Each bit of the BW field may correspond to a different channel, and depending on whether each bit has a value of 0 or 1, the fields or data fields following the UHR-Header-A 503 may be transmitted using only the channel corresponding to the bit having a value of 1.

UHR-STF 504 and UHR-CEF 505 are respectively a training field containing a signal that is used to synchronize reception timing, and a channel estimating field containing a signal that is used to perform channel estimation, for the following fields of the IEEE 802.11 UHR standard. The foregoing fields respectively correspond to EDMG-STF and EDMG-CEF fields defined in IEEE 802.11ay. The foregoing fields may be absent. For example, in a case where a PPDU corresponds to a Control Mode PPDU defined in the IEEE 802.11ay standard and to be used to transmit data that requires high reliability, such as control data, the fields may be absent.

UHR-Header-B 506 is present in a case where a PPDU is a MU PPDU, which is a PPDU for multi-users (Multi-User, MU). The UHR-Header-B 506 is a header field containing information unique to each STA, which is used to demodulate or interpret data fields by each user, i.e., each STA. This field corresponds to an EDMG-Header-B field in the IEEE 802.11ay standard.

Data 507 is a data field. The Data 507 contains data that is transmitted from the communication apparatus 101 to the communication apparatus 102. In a case where the communication apparatus 102 transmits data to the communication apparatus 101, the data is contained in the Data 507.

TRN 508 is a beamforming training field containing a signal for beamforming. This field corresponds to a TRN field in the IEEE 802.11ay standard. This field may be omitted as appropriate.

In the present embodiment, the L-STF 500 and the L-CEF 501 are compatible with the IEEE 802.11ay standard. Further, the L-Header 502 may also be configured to be compatible. In this case, fields with a channel bandwidth specified by the channel bandwidth field are set after the field containing the channel bandwidth field.

The L-STF 500 and the L-CEF 501 and the L-Header 502 may be incompatible with IEEE 802.11ay and may be newly defined in the IEEE 802.11 UHR standard. In this case, each field may be named differently from IEEE 802.11ay. Further, the channel bandwidths of the fields may be any predetermined channel bandwidth. For example, the channel bandwidths may be the minimum channel bandwidth among options for channel bandwidths. Further, the L-Header 502 may contain a channel bandwidth field that is newly defined in the IEEE 802.11 UHR standard. The field may be a field, such as the BW field. Further, the UHR-Header-A 503, the UHR-STF 504, the UHR-CEF 505, and UHR-Header-B may be absent. Further, the TRN 508 may also be newly defined in the IEEE 802.11 UHR standard or subsequent IEEE 802.11 standards. In a case where all fields are newly defined in the IEEE 802.11 UHR standard as described above, the preamble overhead is reduced. Further, a narrow channel bandwidth can be applied starting from the first field of the PPDU, further contributing to an increase in the number of simultaneous multi-user connections to a wireless medium, a reduction in power consumption, and simplification of hardware or software, which are the advantageous effects of the present invention.

After the communication apparatus 101 generates a PPDU, the processing proceeds to step S403.

In step S403, the communication apparatus 101 transmits the generated PPDU. Then, the processing proceeds to step S404.

In step S404, the communication apparatus 101 determines whether to terminate the connection with the communication apparatus 102, based on an instruction input by the user. In a case where the communication apparatus 101 determines to terminate the connection, the connection is terminated, and the operation relating to PPDU transmission described above is terminated. On the other hand, in a case where the communication apparatus 101 determines to continue the connection, the processing returns to step S400, and the operation relating to PPDU transmission is continued. In a case of the communication apparatus 102, whether to terminate the connection with the communication apparatus 101 is determined based on an instruction input by the user. In a case where the communication apparatus 102 determines to terminate the connection, the connection with the communication apparatus 101 is terminated, and the operation relating to PPDU transmission described above is terminated. On the other hand, in a case where the communication apparatus 102 determines to continue the connection with the communication apparatus 101, the processing returns to step S400, and the operation relating to PPDU transmission is continued.

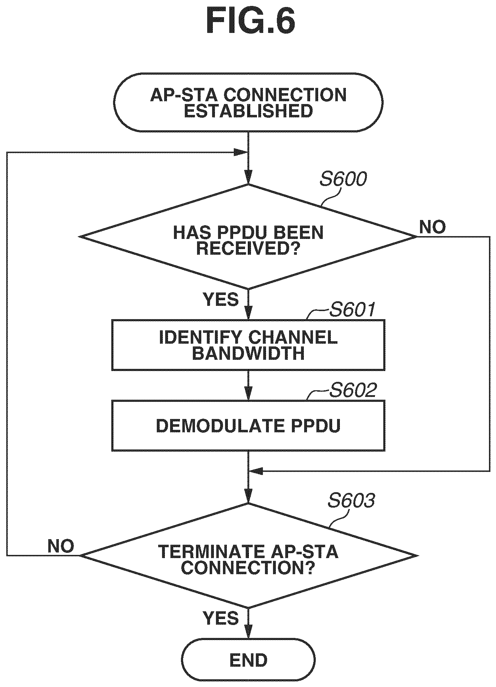

An operation of the communication apparatuses 101 and 102 according to the present embodiment that relate to PPDU reception in the millimeter-wave band will be described below with reference to Fig. 6. The operation is initiated when the communication apparatus 101 and the communication apparatus 102 are connected, i.e., when the communication apparatus 102 participates in the BSS formed by the communication apparatus 101.

The communication apparatus 102 joins the BSS based on an instruction input by the user. Prior to participation in the BSS, in response to receipt of a Beacon frame transmitted by the AP, the communication apparatus 102 transmits an Association Request frame to the AP to request participation in the BSS and receives an Association Response frame, which is a response frame to the Association Request frame, whereby the communication apparatus 102 participates in the BSS.

Prior to the exchange of Association Request/Response frames, the communication apparatus 102 may transmit a Probe Request frame to discover APs and receive a Probe Response frame, which is a response frame to the Probe Request frame.

The main component responsible for the operation of the communication apparatuses 101 and 102 is the control unit 202 in terms of hardware and the frame processing unit 302 in terms of functionality.

The operation of the communication apparatus 101 will be described below. Unless otherwise specified, the same applies to the operation of the communication apparatus 102.

In step S600, the communication apparatus 101 determines whether a new PPDU has been received. In a case where the communication apparatus 101 determines that a new PPDU has been received, the processing proceeds to step S601. In step S601, the communication apparatus 101 identifies the channel bandwidth of the received PPDU. The communication apparatus 101 identifies the channel bandwidth of the PPDU based on the value in the field described above in the description of step S402. After the communication apparatus 101 identifies the channel bandwidth of the PPDU, the processing proceeds to step S602.

In step S602, the communication apparatus 101 demodulates the Data 507, i.e., data field, according to the channel bandwidth. The UHR-Header-A 503 and the UHR-Header-B 506, i.e., header field, may also be demodulated according to the channel bandwidth. In this case, in a case where the field to be demodulated is modulated using Single Carrier (SC), the communication apparatus 101 executes a dispreading process in accordance with the channel bandwidth. In a case where the field is modulated using Orthogonal Frequency Division Multiplex (OFDM), a Fast Fourier Transform process is executed with a subcarrier configuration based on the channel bandwidth. After the communication apparatus 101 demodulates the data field, the processing proceeds to step S603.

In step S603, the communication apparatus 101 determines whether to terminate the connection with the communication apparatus 102 based on an instruction input by the user. In a case where the communication apparatus 101 determines to terminate the connection, the connection is terminated, and the operation relating to PPDU transmission described above is terminated. On the other hand, in a case where the communication apparatus 101 determines to continue the connection, the processing returns to step S600, and the operation relating to PPDU reception is continued. In the case of the communication apparatus 102, whether to terminate the connection with the communication apparatus 101 is determined based on an instruction input by the user. In a case where the communication apparatus 102 determines to terminate the connection, the connection with the communication apparatus 101 is terminated, and the operation relating to PPDU reception described above is terminated. On the other hand, in a case where the communication apparatus 102 determines to continue the connection with the communication apparatus 101, the processing returns to step S600, and the operation relating to PPDU reception is continued.

A storage medium in which program codes of software for realizing the above-described functions are stored may be supplied to a system or an apparatus, and a computer (CPU or MPU) of the system or the apparatus may read and execute the program codes stored in the storage medium. In this case, the program code itself read from the storage medium realizes the functions of the above-described embodiments, and the storage medium storing the program code constitutes the above-described apparatus.

As the storage medium for supplying the program code, for example, a flexible disk, a hard disk, an optical disk, a magneto-optical disk, a CD-ROM, a CD-R, a magnetic tape, a nonvolatile memory card, a ROM, a DVD, or the like may be used.

Furthermore, the functions described above may be implemented not only by executing the program code read by the computer but also by causing an OS running on the computer to perform part or all of the actual processing based on the instructions of the program code. The OS is an abbreviation of an operating system.

Furthermore, the program code read out from the storage medium is written in a memory provided in a function expansion board inserted into the computer or a function expansion unit connected to the computer. A CPU provided in the function expansion board or the function expansion unit may perform a part or all of the actual processing based on the instructions of the program code to realize the above-described functions.

The present invention can also be realized by processing in which a program for realizing one or more functions of the above-described exemplary embodiments is supplied to a system or an apparatus via a network or a storage medium, and one or more processors in a computer of the system or the apparatus read and execute the program. The present invention can also be realized by a circuit (for example, an ASIC) that realizes one or more functions.

The disclosure of each of the above-described exemplary embodiments also includes the following configurations.

The present invention is not limited to the above-exemplary embodiments, and various modifications and variations can be made without departing from the spirit and scope of the present invention. Accordingly, the following claims are appended to disclose the scope of the invention.

This application claims the benefit of Japanese Patent Application No. 2022-125087, filed August 4, 2022, which is hereby incorporated by reference herein in its entirety.

## Claims

1. A wireless communication apparatus comprising:
a transmission unit configured to transmit a Physical Layer Protocol Data Unit (PPDU) in a millimeter-wave band,
wherein the PPDU contains:
a training field containing a signal for synchronization of reception timing in the millimeter-wave band;
a channel estimating field containing a signal for channel estimation in the millimeter-wave band;
a channel bandwidth field containing channel bandwidth information; and
a data field for a channel bandwidth indicated by the channel bandwidth information contained in the channel bandwidth field, and
wherein the channel bandwidth information indicates a channel bandwidth of less than 2.16 GHz.

2. A wireless communication apparatus comprising:
a reception unit configured to receive a Physical Layer Protocol Data Unit (PPDU) in a millimeter-wave band,
wherein the PPDU contains:
a training field containing a signal for synchronization of reception timing in the millimeter-wave band;
a channel estimating field containing a signal for channel estimation in the millimeter-wave band;
a channel bandwidth field containing channel bandwidth information; and
a data field for a channel bandwidth indicated by the channel bandwidth information contained in the channel bandwidth field, and
wherein the channel bandwidth information indicates a channel bandwidth of less than 2.16 GHz.

3. The wireless communication apparatus according to Claim 1 or 2,
wherein in the PPDU, the data field is set after an early channel bandwidth field,
the channel bandwidth field is set after the channel estimating field, and
the channel estimating field is set after the training field.

4. The wireless communication apparatus according to Claim 3, wherein the PPDU further contains a header field that contains information to be used for demodulation of the data field and the channel estimating field.

5. The wireless communication apparatus according to Claim 4, wherein the PPDU contains, after the data field, a beamforming training field that contains a signal for beamforming training in the millimeter-wave band.

6. A method for controlling a wireless communication apparatus comprising:
transmitting a Physical Layer Protocol Data Unit (PPDU) in a millimeter-wave band,
wherein the PPDU contains:
a training field containing a signal for synchronization of reception timing in the millimeter-wave band;
a channel estimating field containing a signal for channel estimation in the millimeter-wave band;
a channel bandwidth field containing channel bandwidth information; and
a data field for a channel bandwidth indicated by the channel bandwidth information contained in the channel bandwidth field, and
wherein the channel bandwidth information indicates a channel bandwidth of less than 2.16 GHz.

7. A method for controlling a wireless communication apparatus comprising:
receiving a Physical Layer Protocol Data Unit (PPDU) in a millimeter-wave band,
wherein the PPDU contains:
a training field containing a signal for synchronization of reception timing in the millimeter-wave band;
a channel estimating field containing a signal for channel estimation in the millimeter-wave band;
a channel bandwidth field containing channel bandwidth information; and
a data field for a channel bandwidth indicated by the channel bandwidth information contained in the channel bandwidth field, and
wherein the channel bandwidth information indicates a channel bandwidth of less than 2.16 GHz.

8. A program for causing a computer to function as each unit of a communication apparatus according to Claim 1 or 2.
